## Europäisches Patentamt
## European Patent Office
## Office européen des brevets

(11) Veröffentlichungsnummer: **0 070 363**
**B1**

(12) # EUROPÄISCHE PATENTSCHRIFT

(45) Veröffentlichungstag der Patentschrift:
26.02.86

(51) Int. Cl.⁴: **A 22 C 11/02**

(21) Anmeldenummer: **82104121.7**

(22) Anmeldetag: **12.05.82**

(54) Zum gleichzeitigen Entfälteln, Glätten und Bremsen einer gerafften Schlauchhülle geeignete Vorrichtung.

(30) Priorität: **21.05.81 DE 3120205**

(43) Veröffentlichungstag der Anmeldung:
**26.01.83 Patentblatt 83/4**

(45) Bekanntmachung des Hinweises auf die Patenterteilung:
**26.02.86 Patentblatt 86/9**

(84) Benannte Vertragsstaaten:
**AT BE CH DE FR GB IT LI LU NL SE**

(56) Entgegenhaltungen:
**EP - A - 0 015 622**
**EP - A - 0 021 189**
**EP - A - 0 046 560**
**EP - A - 0 068 342**
**US - A - 3 975 795**
**US - A - 4 034 441**
**US - A - 4 077 090**

(73) Patentinhaber: **HOECHST AKTIENGESELLSCHAFT,**
**Postfach 80 03 20, D-6230 Frankfurt am Main 80 (DE)**

(72) Erfinder: **Michel, Wolfgang, Am Hohen Stein 24,**
**D-6200 Wiesbaden (DE)**
Erfinder: **Becker, Reinhold, Dr., Am Hohen Stein 18,**
**D-6200 Wiesbaden (DE)**

## Beschreibung

1. Die Erfindung bezieht sich auf eine Vorrichtung von der im ersten Teil des Anspruchs 1 genannten Art, sowie auf eine vorverpackte funktionelle Einheit mit den im ersten Teil des Anspruchs 9 angegebenen Merkmalen.

Zur Verpackung von Nahrungsmitteln, z.B. Fleischwaren in Form vun Wurstmasse, werden bekanntlich geraffte, schlauchförmige Hüllen aus synthetischem, halbsynthetischem oder natürlichem Material verwendet. Diese Hüllen, in der Fachsprache auch als "Raupen" oder "Hohlstäbe" bezeichnet, werden aus langen Hüllen durch Fälteln und längsaxiales Stauchen hergestellt, wobei die Länge der gerafften Hülle gewöhnlich nur noch 1 bis 3% der Ursprungslänge beträgt. Im allgemeinen wird zum Abfüllen der Wurstmasse zunächst eine einseitig verschlossene, geraffte schlauchförmige Hülle über das Füllrohr einer Wurstabfüllmaschine geschoben. Die Wurstmasse wird dann unter Druck durch das Füllrohr in die Hülle gepreßt, welche dadurch fortlaufend entfältelt wird. Nach Erreichen einer bestimmten Länge werden zylinderförmige Würste abgebunden und verschlossen.

Der Durchmesser der erhaltenen Würste sollte aus verschiedenen Gründen über die gesamte Länge konstant bleiben. Nur ein gleichmäßiger Durchmesser, dessen Größe z.B. vom Hüllenmaterial abhängig ist, gewährleistet einen optimalen Abfüllvorgang. Auch besteht bei Überfüllung die Gefahr des Aufplatzens der Wursthülle, während die Wursthülle bei zu geringer Füllung eine faltige Oberfläche zeigt.

Es wurden bereits verschiedene Vorrichtungen zum Abfüllen von Wurstmasse in geraffte, schlauchförmige Hüllen vorgeschlagen, bei denen spezielle Einrichtungen einen möglichst gleichmäßigen Durchmesser der abgefüllten Packung erzielen sollen.

So ist es üblich, in der Nähe der Öffnung des Füllrohres der Abfüllmaschine ein Kalibrierteil anzubringen, welches mit seiner Oberfläche auf die Innenwand der zu füllenden Hülle angepreßt wird und diese aufweitet. Durch diesen Anpreßdruck treten zwischen dem Kalibrierteil und der Innenwand der Hülle Reibungskräfte auf, welche den Abzug der Hülle bremsen (US—A—2,871,508).

Es ist auch bekannt, die geraffte, schlauchförmige Hülle zusammen mit einer Kalibrierscheibe zu verpacken und diese Anordnung vor dem Füllvorgang mit dem Füllrohr zu verbinden (US—A—4,007,761). Die Kalibrierscheibe wird von einem ungerafften Teil eingeschlossen, wobei allerdings der Außenumfang der Kalibrierscheibe größe sein soll als der Innenumfang der ungerafften Hülle. Beim Füllvorgang (US—A—4,077,090) wird die Hülle über die Kalibrierscheibe gezogen und somit gedehnt und aufgeweitet. Die Kalibrierscheibe muß aus starrem unelastischem Material bestehen, so daß ihr Durchmesser durch die Andruckkraft der Hülle gegen den Umfang der Kalibrierscheibe nicht verändert werden kann. Das Bremsen der Hülle beim Abziehen vom gerafften Hüllenteil während des Füllvorgangs erfolgt durch eine zusätzliche nach der Kalibrierscheibe angeordnete Einrichtung in Form eines Rings mit einem ringförmigen Ansatz, wobei die Bremswirkung durch die Reibkraft zwischen Schlauchhülle und dem Ansatz bestimmt wird.

Diese unelastische Kalibrierscheibe zeigt den Nachteil, daß bei fertigungstechnisch nicht zu vermeidenden Schankungen des Hüllenumfangs keine optimale Füllung der Hülle erreicht wird. Bei zu kleinem Kaliber der Hülle besteht außerdem die Gefahr, daß sie durch die Kalibrierscheibe beschädigt wird oder abreißt; zumindest tritt eine besonders starke Reibung zwischen Hülle und Kalibrierscheibe auf, so daß die Hülle mit Wurstmasse überfüllt werden kann und beim Brühen dazu neigt, dem auftretenden hohen Druck nicht standzuhalten und zu platzen.

Ferner ist eine Kalibriervorrichtung bekannt (US—A—4,202,075), die aus einem flexiblen Material besteht und deren Durchmesser variierbar ist. Auch mit dieser Vorrichtung soll die Schlauchhülle vor dem Befüllen mit Wurstmasse gedehnt und aufgeweitet werden, wobei diese Vorrichtung eine steuerbare Aufweitung gestattet. Allerdings können auch in diesem Fall starke Reibungskräfte zwischen der Schlauchhülle und dem Kalibrierteil auftreten. Das Abbremsen der Schlauchhülle erfolgt auch in diesem Fall mit einem nach der Kalibriervorrichtung angeordneten Bremselement, welches die Schlauchhülle gegen das Füllrohr anpreßt.

Die zum Entfälteln und Glätten einer Schlauchhülle geeignete Vorrichtung gemäß der EP—A—46 560 der Patentinhaberin (veröffentlicht am 3.3.1982) besteht aus einem ringartigen Hohlkörper mit flächenhafter äußerer Umfangsfläche. Sein maximaler Außendurchmesser ist kleiner als der innere Durchmesser der entrafften Schlauchhülle, so daß beim Füllvorgang zwischen der Schlauchhülle und dem Hohlkörper keine starken Reibungskräfte auftreten können. Das Abbremsen der Schlauchhülle erfolgt wie bei den anderen Vorrichtungen durch nachgeordnete Elemente.

Auch der ringförmige Hohlkörper der US—A—3,975,795 hat einen maximalen Durchmesser, der kleiner ist als der innere Durchmesser der entrafften Schlauchhülle. Dieser bekannte Hohlkörper soll allerdings nur zum Glätten der Schlauchhülle dienen, während ein vor dem ringförmigen Hohlkörper angeordneter Ring, durch dessen Bohrung die Schlauchhülle gezogen wird, zum Entfälteln vorgesehen ist. Die Außenseite des Hohlkörpers wird von einem äußeren Ringelement umgeben, wodurch sich ein konischer Durchgang ergibt, durch den die Schlauchhülle beim Stopfvorgang mit einstellbarer Reibung hindurchgleitet. Die Reibungsfläche, in der auf die Schlauchhülle Reibungskräfte ausgeübt werden, ist allerdings relativ groß, so daß das Schlauchmaterial stark mechanisch belastet wird.

Zudem dürften auch Probleme auftreten, wenn der Schlauchdurchmesser dem konischen Durchgang folgend verkleinert werden soll. Zur Verhinderung des Zurückfließens der Füllmasse ist außerdem noch ein zusätzlicher, konzentrisch an der Füllrohröffnung angeordneter Ringkörper erforderlich, welcher die Schlauchhülle lose, aber eng genug, an die äußere Oberfläche des Füllrohrs anlegt.

Auch die Anordnung zum Behandeln von gerafften Kunstdarmhüllen der EP—A—15 622 enthält eine Vorrichtung zum Entfälten und Glätten der Hülle in Form eines ringartigen Hohlkörpers. Seine äußere Oberfläche weist zwei im Abstand zueinander angeordnete Wülste auf, welche zwischen sich eine Reckzone für die Hülle bilden. Das Abbremsen der Hülle erfolgt allerdings mittels einer nachgeordneten Darmbremse, welche die Schlauchhülle in der Nähe der Füllrohröffnung gegen die Fülrohraußenseite anpreßt.

Ausgehend von diesem Stand der Technik besteht die Aufgabe der vorliegenden Erfindung darin, eine Vorrichtung zu schaffen, die zum gleichzeitigen Entfälteln, Glätten und Abbremsen einer gerafften Schlauchhülle vor dem Befüllen mit einer Stopfvorrichtung geeignet ist, wobei die Schlauchhülle problemlos unter gleichzeitigem Abbremsen von gerafften in einen einwandfreien faltenfreien Zustand übergeführt werden kann, ohne daß Gefahr besteht, daß die Schlauchhülle bei diesem Vorgang vom Bremsteil oder vom Kalibrierteil beschädigt wird. Ferner soll die Vorrichtung ein mit dem Kalibrierteil zusammenarbeitendes Bremsteil umfassen, welches einen ruckfreien Abzug ermöglicht, wobei die Gefahr von Abrissen der Schlauchhülle verringert ist. Außerdem soll die Vorrichtung aus möglichst wenigen, einfach aufgebauten und leicht handhabbaren Elementen aufgebaut sein.

Überraschenderweise wird diese Aufgabe gelöst durch die Vorrichtung mit den in Anspruch 1 und mit der vorverpackten funktionellen Einheit mit den im Anspruch 9 aufgezeigten Merkmalen. Die abhängigen Ansprüche betreffen Weiterbildungen der Vorrichtung.

Erfindungsgemäß ist der maximale Durchmesser des zylinder- oder ringförmigen Hohlkörpers kleiner als der innere Durchmesser der entrafften Schlauchhülle. Der Einfachheit halber wird im folgenden nur der Begriff "ringförmiger Hohlkörper" verwendet.

Es ist vollkommen ausreichend, wenn die Schlauchhülle zum gleichzeitigen Entfälteln und Glätten über die Außenseite des ringförmigen Hohlkörpers gezogen wird, ohne daß eine Aufweitung der Schlauchhülle über ihren ursprünglichen Durchmesser hinaus erforderlich ist. Vorzugsweise ist der maximale Durchmesser des ringförmigen Hohlkörpers 70 bis 99%, insbesondere 90 bis 99%, des Innendurchmessers der Schlauchhülle im ungerafften Zustand. Ferner erfolgt das Abbremsen der Schlauchhülle beim Füllvorgang nicht nach dem Entfälteln und Glätten und auch nicht durch Spreizen oder Dehnen der Schlauchhülle. Vielmehr wird das Abbremsen in einer einzigen Vorrichtung zusammen mit dem Entfälteln und Glätten durchgeführt.

Die schlauchförmige Hülle besteht beispielsweise aus einem üblichen zur Herstellung von Würsten verwendeten Material, wie Cellulosehydrat, Kollagen oder Kunstdarm, z.B. aus Polyamid oder Polyester, und ist gegebenenfalls faserverstärkt, insbesondere mit einer Papiereinlage. Sie zeigt gegebenenfalls auf ihrer äußeren und/oder inneren Oberfläche eine übliche Beschichtung, z.B. aus einem wasserdampf- und sauerstoffundurchlässigen Material, welche beispielsweise mit einem üblichen die Haftung verbessernden Mittel auf der Schlauchoberfläche verankert wird. Bei Verwendung einer Hülle aus Cellulosehydrat kann diese einen üblichen Wassergehält von z.B. 6 bis 15%, aber auch einen sehr hohen Wassergehalt besitzen, z.B. bis zu etwa 35%, so daß sie vor dem Befüllen nicht gewässert werden, muß. Cellulosehydrathüllen werden gewöhnlich durch Koagulation von Viskose und Regenerierung der Cellulose hergestellt.

Die beiden wesentlichen erfindungsgemäßen Vorrichtungsteile sind der im Innern der Schlauchhülle angeordnete und auf dem äußeren Umfang des Füllrohrs fixierte ringförmige Hohlkörper, welcher die schlauchförmige Hülle vor dem Befüllen mit Wurstmasse gleichzeitig entrafft und glättet und die auf die in der äußeren Oberfläche des ringförmigen Hohlkörpers vorhandene Vertiefung einwirkende einstellbare Bremse. Der ringförmige Hohlkörper besteht aus einer Ringscheibe oder einem Zylinder mit kreisförmigem Außenumfang und mit einer zentralen Öffnung zum Aufschieben und lösbaren Fixieren auf dem Füllrohr einer üblichen Stopfvorrichtung un der Nähe der Füllrohröffnung. Die zentrale Öffnung zeigt somit einen Durchmesser, der im wesentlichen dem äußeren Durchmesser des Füllrohres entspricht und ist vorzugsweise im wesentlichen zylinderförmig. Vorzugsweise ist die in der Nähe der Füllrohröffnung angeordnete zentrale Öffnung des ringförmigen Hohlkörpers in Schlauchfortbewegungsrichtung konisch erweitert, so daß sie eine trichterartige Öffnung an der Füllrohröffnung bildet. Die Stopfvorrichtung dient z.B. zum Abfüllen von Wurstmasse in schlauchförmige Hüllen. Die lösbare Befestigung des ringförmigen Hohlkörpers am Füllrohr erfolgt z.B. mit einem Gewinde oder Bajonettverschluß oder über einen Schnappverschluß mit Hilfe von abbrechbaren Elementen, wie sie in der US—PS—4,034,441 beschrieben sind, von elastischen Stegen oder eines Sicherungsringes nach DIN 471/472 neben oder in der zentralen Öffnung des ringförmigen Hohlkörpers, die z.B. in eine Nut, Nocke oder Rille des Füllrohres einrasten. Der ringförmige Hohlkörper ist zweckmäßigerweise relativ starr und wenig flexibel und besteht gewöhnlich aus Metall oder Kunststoff wie Polypropylen oder Polyethylen. Bei Verwendung von Kunststoff mit einem E-Modul von $10^3$—$10^4$ N/mm² ist z.B. eine Dicke von 2 bis 6 mm ausreichend, um einen ausreichend starren Hohlkörper zu erhalten. Die zur Befestigung vorgesehenen Stege müssen dann eine relativ geringe Dicke von etwa 2 bis 3 mm besitzen, damit sie elastisch federnd sind. Zur Verringerung der Reibkraft zwischen Umfangsfläche des ringförmigen Hohlkörpers und Schlauchhülle wird die Umfangsfläche vorteilhaft mit einem entsprechenden Überzug versehen, z.B. auf Basis von perfluorierten Kohlenwasserstoffen.

Die am äußeren Umfang des ringförmigen Hohlkörpers sich erstreckende Außenoberfläche hat eine umlaufende, ringförmige Vertiefung, die im Querschnitt und in Seitenansicht im wesentlichen U-förmig oder V-förmige ausgebildet ist und sich vorzugsweise um den gesamten äußeren Umfang des ringförmigen Hohlkörpers erstreckt. Neben dieser Vertiefung in Richtung zu den beiden Stirnflächen zeigt der ringförmige Hohlkörper seinen maximalen Durchmesser. Die Schlauchhülle ist mit einem entfältelten Teil über diese Außenoberfläche gezogen.

Der maximale Durchmesser des ringförmigen Hohlkörpers gewährleistet, daß die Schlauchhülle vor dem eigentlichen Füllen und während des gleichzeitigen Entfältelns und Glättens einen Innendurchmesser erhält, der kleiner ist und vorzugsweise nur 70 bis 99, insbesondere 90 bis 99% des Wertes beträgt, den der Innendurchmesser der schlauchförmigen Hülle vor dem Raffen gezeigt hatte. Somit unterbleibt eine Dehnung oder Spreizung der Hülle und deren nachteilige Auswirkung auf den Füllvorgang.

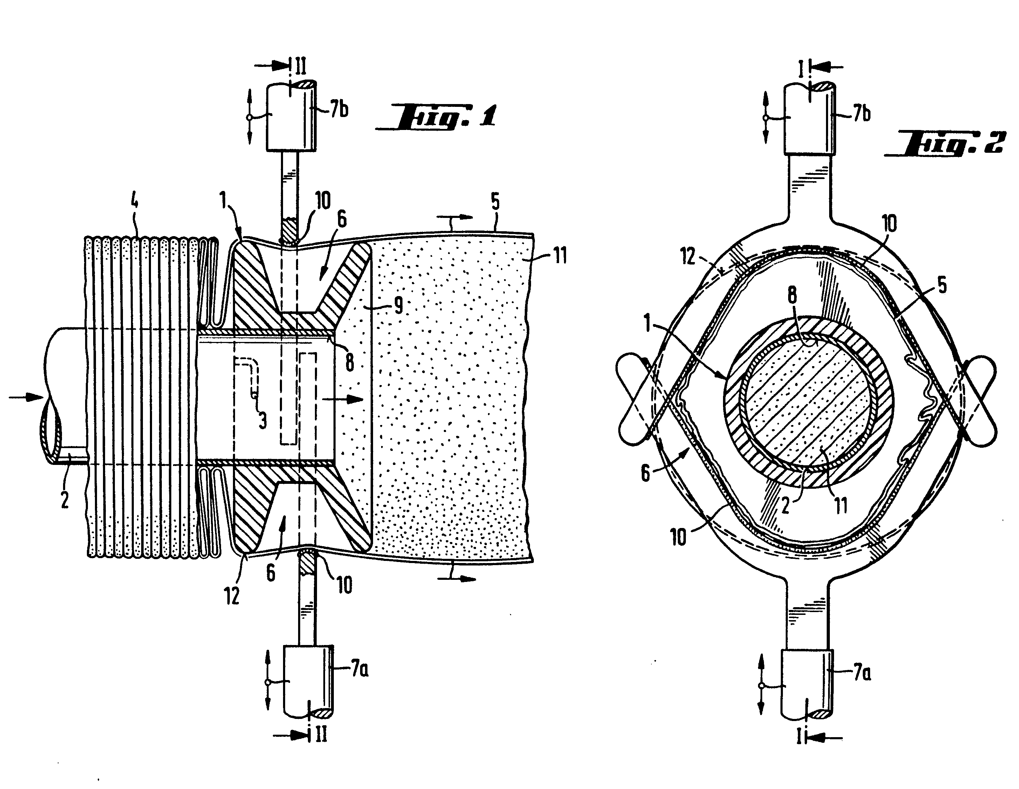

In einer Ausführungsform des ringförmigen Hohlkörpers ist sein maximaler Umfang jeweils neben der Vertiefung varrierbar, so daß der Hohlkörper für Schlauchhüllen mit verschiedenen Kaliber verwendet werden kann. Diese Änderung seines Umfanges erfolgt beispielsweise mit einem zweiten ringförmigen Kalbrierteil, welches sich ebenfalls auf dem Füllrohr befindet und durch Anpressen mit seiner Außenoberfläche in Kontakt mit der Innenfläche der zentralen Öffnung des ringförmigen Hohlkörpers tritt, dadurch die Öffnung aufweitet und somit auch den maximalen äußeren Umfang des ringförmigen Hohlkörpers vergrößert. Damit der ringförmige Hohlkörper zur Aufweitung ausreichend flexibel ist, muß er eine relativ geringe Dicke besitzen. Bei dieser Ausführungsform muß die zentrale Öffnung des ringförmigen Hohlkörpers an einer der beiden Stirnflächen des ringförmigen Hohlkörpers konisch aufgeweitet sein und/oder an der Stirnfläche des ringförmigen Hohlkörpers in Form eines sich konisch erweiternden Flanschrandes enden. Durch Anpressen des zweiten ringförmigen Kalibrierteils mit seiner Außenoberfläche gegen die zentrale Öffnung des ringförmigen Hohlkörpers im Bereich seiner konischen Erweiterung wird der maximale Umfang des ringförmigen Hohlkörpers vergrößert. Diese steuerbare Aufweitung des Hohlkörpers kann analog der in der US—PS—4,202,075 in Fig. 1, 2 oder 4 oder US—PS—3,264,679 in Fig. 27 gezeigten Aufweitung von Kalibriereinrichtungen erfolgen. Hierbei ist eines der beiden Vorrichtungsteile, nämlich der ringförmige Hohlkörper oder das zweite ringförmige Kalibrierteil, lösbar auf dem Füllrohr befestigt, während das andere Vorrichtungsteil, z.B. mit einem Gewinde, örtlich variabel auf dem Füllrohr angeordnet ist.

Es ist auch möglich, auf beiden Stirnflächen des ringförmigen Hohlkörpers erweiterte Öffnungen vorzusehen, so daß ein weiteres Kalibrierteil verwendet werden kann.

Der entfältelte Teil der Schlauchhülle auf dem ringförmigen Hohlkörper wird durch eine Bremse in der Vertiefung am äußeren Umfang des ringförmigen Hohlkörpers eingedrückt, wobei das Hüllenkaliber verengt und eine Stauch- und Bremskraft ausgeübt wird.

Die Bremse kann aus einem oder mehreren einzelnen Segmenten bestehen, die zusammen einen Ring ergeben, wobei gegebenenfalls zwischen den einzelnen Segmenten Abstände vorhanden sind. Die Form der Vertiefung am äußeren Umfang des ringförmigen Hohlkörpers wird vorzugsweise der Form der Bremse angepaßt. Es ist vorteilhaft, wenn die Bremse möglichst über einen sehr großen Teil der Umfangsfläche der entrafften Schlauchhülle einwirkt. Die Bremse kann Kreisform aber auch die Form eines Vielecks zeigen, welches aus V-förmigen, W-förmigen oder Y-förmigen Segmenten besteht. Die Spitzen des Vielecks können auch abgerundet sein, so daß die Bremssegmente im Querschnitt sinusförmig gewellt sind. Die Oberfläche der Bremse besteht vorzugsweise aus elastischem Material, z.B. aus Gummi, und/oder zeigt eine glatte Oberfläche, so daß die Schlauchhülle beim Anpressen nicht beschädigt wird.

Das Eindrücken der Schlauchhülle in die Vertiefung des ringförmigen Hohlkörpers erfolgt maximal bis zu einer Tiefe, die gleich der Tiefe der Vertiefung in dem ringförmigen Hohlkörper ist.

Die Breite der Vertiefung in der Außenoberfläche ist gewöhnlich größer als 50% der Länge des ringförmigen Hohlkörpers; zweckmäßigerweise beginnt die Vertiefung angrenzend an den beiden Stirnflächen des ringförmigen Hohlkörpers. Bei Schlauchhüllen mit einem Durchmesser von z.B. 90 bis 120 mm ist die Länge des ringförmigen Hohlkörpers 20 bis 100 mm, der maximale Durchmesser des ringförmigen Hohlkörpers in der Nähe der beiden Stirnflächen beträgt je nach Schlauchhüllendurchmesser etwa 89 bis 119 mm. Der minimale Durchmesser des ringförmigen Hohlkörpers ist etwa um 5 bis 10 mm größer als der Außendurchmesser des Füllrohrs, welcher gewöhnlich zwischen 25 und 60 mm groß ist. Der minimale Durchmesser des Hohlkörpers ist somit um 25 bis 65%, vorzugsweise um 35 bis 55%, kleiner als sein maximaler Durchmesser.

Nach dem ringförmigen Hohlkörper und anschließend nach der Füllrohröffnung folgt eine Einrichtung zum Verschließen bzw. Abbinden der Schlauchhülle, z.B. eine Clip-Vorrichtung, und eine Schneidestation.

Beim Füllvorgang wird der entraffte Raupenanfang, der über den ringförmigen Hohlkörper gezogen ist, durch die eingepreßte Füllmasse durch die Clip-Vorrichtung gedrückt. Während des Füllvorgangs gleitet der laufend vom gerafften Hüllenteil abgezogene Schlauch über den ringförmigen Hohlkörper. Durch den Druck, mit dem das pastöse Füllgut, z.B. Wurstmasse, durch das Füllrohr in den entfältelten Teil der schlauchförmigen Hülle gepreßt wird, gleitet die Hülle fortlaufend über die äußere Oberfläche des ringförmigen Hohlkörpers, wobei sie gleichzeitig entfältelt und geglättet wird und infolge der Reibungskräfte durch die gegenseitige Berührung von Bremse, Schlauchhülle und Hohlkörper eine Abbremsung der Schlauchhülle erfolgt. Durch das Ausmaß der Einengung des Schlauchs wird die Bremswirkung reguliert. Hierbei arbeitet man gewöhnlich mit einer Abzugsgeschwindigkeit von 10 bis 20 m/min. Die Länge der äußeren Oberfläche des ringförmigen Hohlkörpers ist vorteilhafterweise 2 bis 4 cm, so daß bei dieser Abzugsgeschwindigkeit die maximale Berührungsdauer zwischen äußerer Oberfläche des ringförmigen Hohlkörpers und innerer Oberfläche der Schlauchhülle gewöhnlich etwa ca. 0,2 bis 0,3 s ist. Der geraffte Teil der Schlauchhülle wird durch den ringförmigen Hohlkörper zurückgehalten. Somit ist auch gewährleistet, daß nur entfältelter und geglätteter Schlauch in die Bremseinheit gelangen kann. Die Vorrichtung gestattet eine exakte und ruckfreie Bremsung, so daß die Gefahr von Schlauchabrissen deutlich verringert wird. Ist eine bestimmte Länge der Schlauchhülle mit Wurstmasse gefüllt, wird sie, z.B. durch die Clip-Vorrichtung, verschlossen und die erhaltene Wurst vom restlichen Schlauchhüllenteil abgetrennt. Wenn die Schlauchhülle vollständig gefüllt ist, wird der ringförmige Hohlkörper gegebenenfalls vom Füllrohr entfernt und kann bei Bedarf wiederverwendet werden.

Die vorverpackte funktionelle Einheit besteht aus einer gerafften schlauchförmigen Hülle, die auf ihrer Außenseite mit einer Schützumhüllung versehen ist, und dem ringförmigen Hohlkörper, der sich an einem Ende der schlauchförmigen Hülle befindet und von einem ungerafften Hüllenteil umgeben ist. Die Schutzumhüllung besteht insbesondere aus wärmeverschweißbaren thermoplastischem Kunststoff, z.B. aus Polyamid, Polyvinylchlorid oder Polyolefin, der gegebenenfalls latentes durch Wärmeeinwirkung auslösbares Schrumpfvermögen aufweist. Sie bildet einen stützbehälter für die in ihrem Hohlraum angeordnete geraffte Schlauchhülle.

In bevorzugter Ausführungsform sind an den Enden der gerafften Schlauchhülle Kreisringscheiben vorhanden, durch deren zentrale Ringöffnung sich die Schutzumhüllung erstreckt und um deren äußere Kreisringfläche in 180° in Richtung zur Mitte der Schlauchhülle die Schutzumhüllung umgeschlagen ist, wie es in Fig. 4 der DE—A—25 10 637 gezeigt ist. Der umgeschlagene Teil der Schutzumhüllung ist vorteilhafterweise mit der äußeren Oberfläche des an die Schlauchhülle anliegenden Teils der Schutzumhüllung verschweißt.

Die Schutzumhüllung ist eine schlauchförmige Folie, insbesondere mit Durchbrechungen oder netzartiger oder gitterartiger Struktur.

Bei Schutzumhüllungen aus schrumpffähiger Folie ist die Schrumpfung vorzugsweise nur an den Enden der Schlauchhülle, z.B. nur im Bereich der Umschlingung um die Kreisringscheibe ausgelöst.

Der entraffte Teil der Schlauchhülle, der sich über die äußere Oberfläche des ringförmigen Hohlkörpers erstreckt, befindet sich außerhalb der Schutzumhüllung, wobei die Kreisringscheiben dem ersten Ende des Hohlkörpers unmittelbar benachbart sind.

Zum Befüllen der funktionellen Einheit wird die geraffte Schlauchhülle mit ihrem offenen Ende auf des Füllrohr der Abfüllmaschine aufgeschoben und der ringförmige Hohlkörper mit den an seinem inneren Umfang vorhandenen Verschlußteilen, z.B. mit den federnden stegartigen Elementen oder mit dem Sicherungsring nach DIN 471/472, auf der äußeren Oberfläche des Füllrohrs nahe der Füllrohröffnung fixiert. Aus dem Füllrohr wird dann pastöse Masse, z.B. Wurstmasse in die Schlauchhülle gepreßt, wobei die Schlauchhülle durch die zentrale Ringöffnung der Kreisringscheibe und anschließend über die äußere Oberfläche des ringförmigen Hohlkörpers gleitet, wobei sie entrafft und geglättet wird. Das Bremsteil drückt auf die äußere Oberfläche der entrafften Schlauchhülle, wobei diese in die vorzugsweise ringförmige Vertiefung am äußeren Umfang des ringförmigen Hohlkörpers eingepreßt wird. Der Durchmesser der zentralen Ringöffnung der Kreisringscheibe der funktionellen Einheit muß entsprechend groß gewählt werden; er ist vorteilhafterweise mindestens so groß wie der Innendurchmesser der gerafften Schlauchhülle.

Die Erfindung wird anhand der Fig. 1 bis 12 erläutert.

Fig. 1 zeigt den ringförmigen Hohlkörper, aufgeschoben und lösbar befestigt auf einem Füllrohr, in Seitenansicht bzw. im Schnitt entlang der Linie I—I der Fig. 2, unter geringer Einschnürung der Schlauchhülle,

Fig. 2 zeigt den ringförmigen Hohlkörper, aufgeschoben und lösbar befestigt auf einem Füllrohr, in Frontansicht bzw. im Schnitt entlang der Linie II—II der Fig. 1,

Fig. 1a zeigt den ringförmigen Hohlkörper, aufgeschoben und lösbar befestigt auf einem Füllrohr, in Seitenansicht bzw. im Schnitt entlang der Linie Ia—Ia der Fig. 2a, unter starker Einschnürung der Schlauchhülle,

Fig. 2a zeigt den ringförmigen Kohlkörper, aufgeschoben und lösbar befestigt auf einem Füllrohr, in Frontansicht bzw. im Schnitt entlang der Linie IIa—IIa der Fig. 1a,

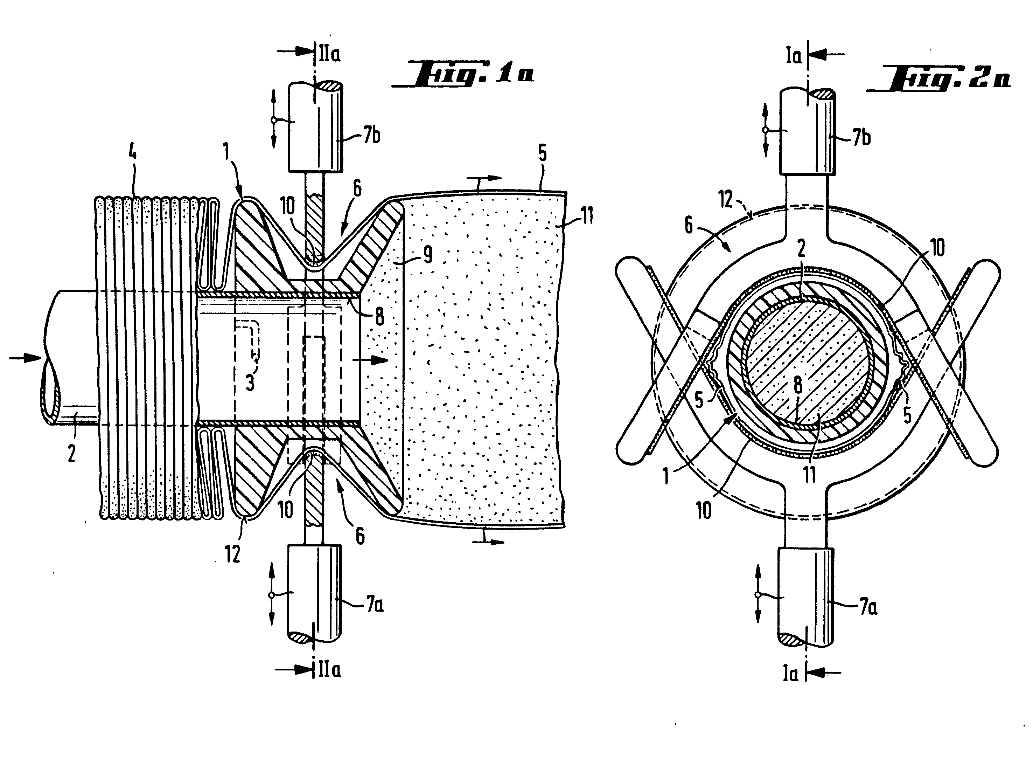

Fig. 3 zeigt eine modifizierte Ausführungsform des ringförmigen Hohlkörpers mit federnden Stegen zur Befestigung am Füllrohr in Frontansicht,

Fig. 4 zeigt den Hohlkörper der Fig. 3 im Schnitt entlang der Linie IV—IV,

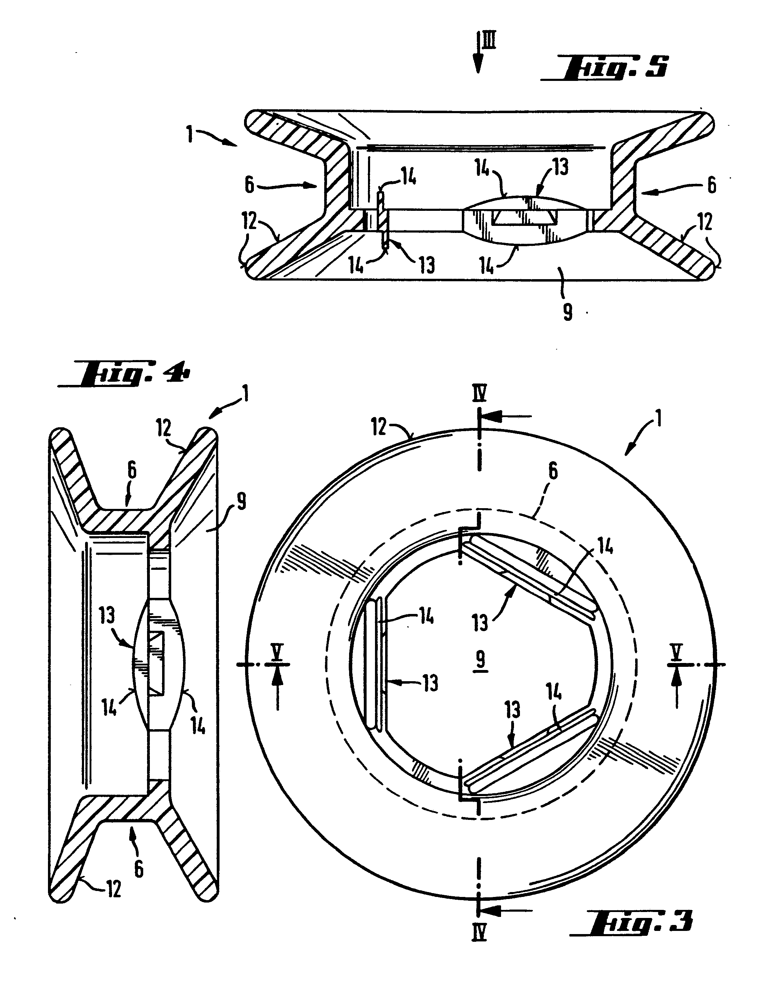

Fig. 5 zeigt den Hohlkörper in Seitenansicht im Schnitt entlang der Linie V—V in Fig. 3,

Fig. 6 zeigt eine weitere Ausführungsform des ringförmigen Hohlkörpers mit einem Sicherungsring nach DIN 471/472 in Frontansicht,

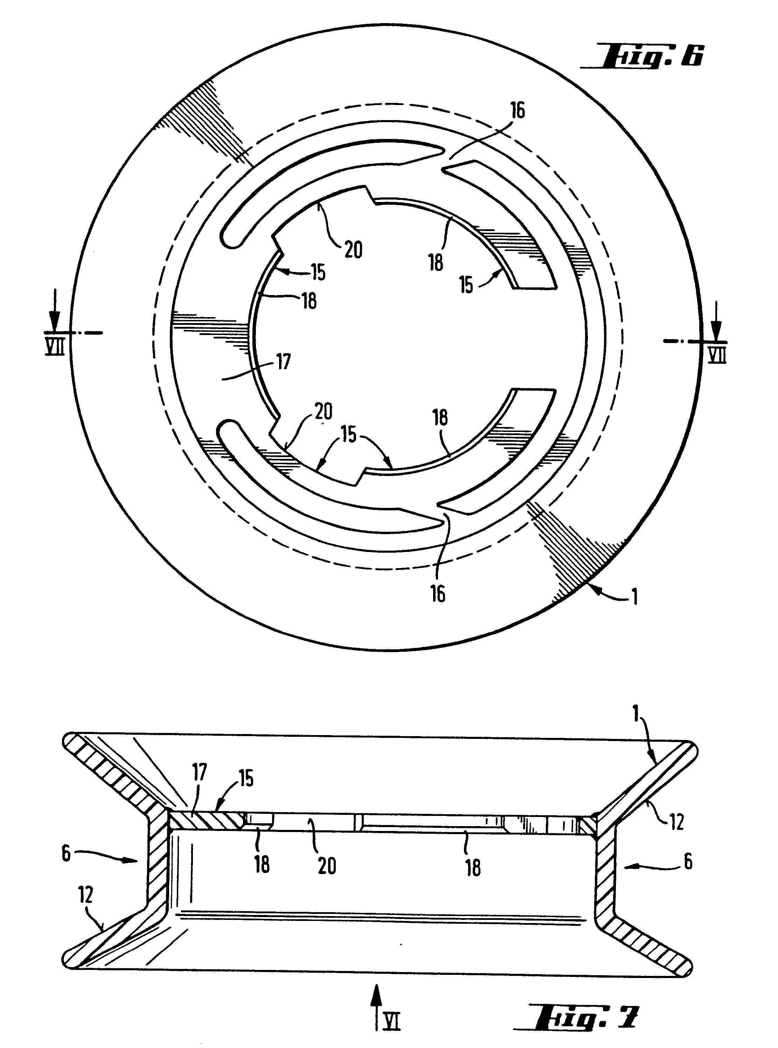

Fig. 7 zeigt den Hohlkörper der Fig. 6 im Schnitt entlang der Linie VII—VII der Fig. 6,

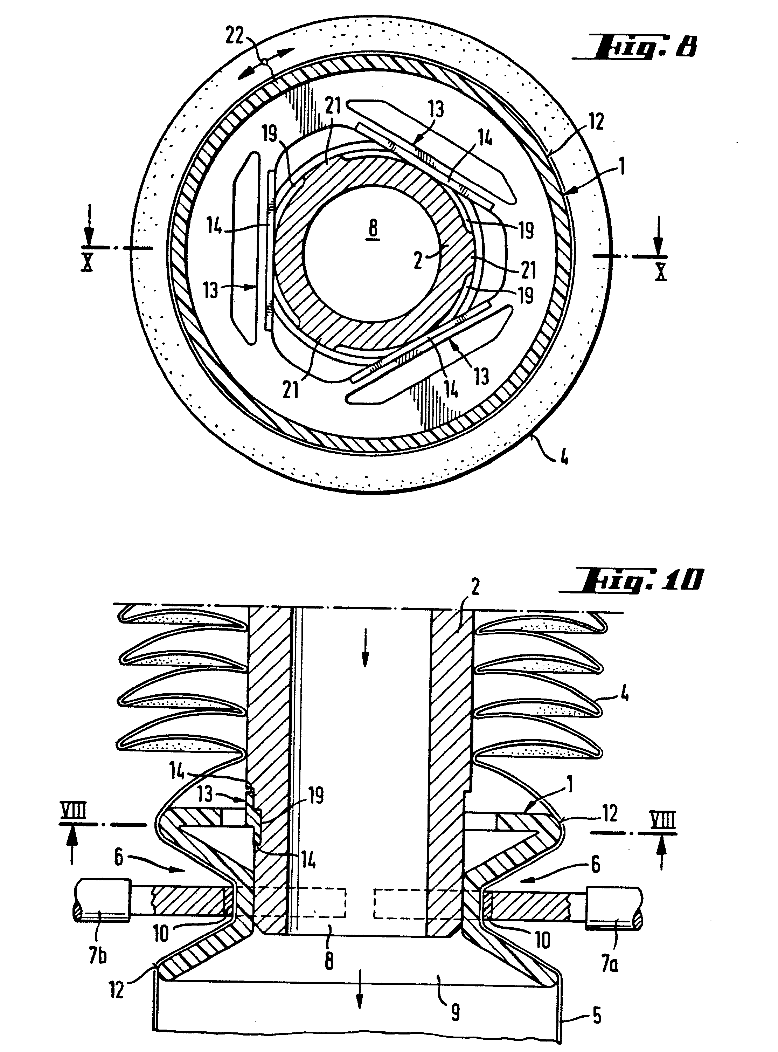

Fig. 8 zeigt eine modifizierte Form des Hohlkörpers der Fig. 3, aufgeschoben und fixiert auf ein Füllrohr in Frontansicht und im Schnitt entlang der Linie VIII—VIII in Fig. 10,

Fig. 9 zeigt in Frontansicht und im Schnitt den Hohlkörper der Fig. 3 oder Fig. 8 auf einem Füllrohr beim Abnehmen vom Füllrohr,

Fig. 10 zeigt die Anordnung der Fig. 8 in Seitenansicht und im Schnitt entlang der Linie X—X in Fig. 8,

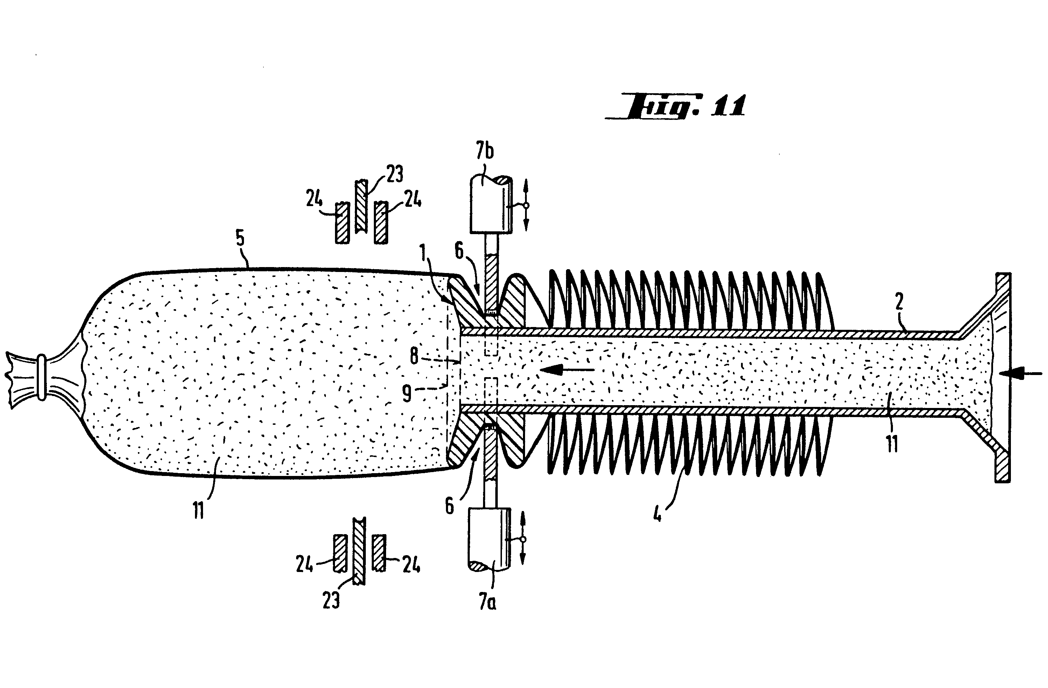

Fig. 11 zeigt eine Anordnung zum Befüllen einer gerafften, schlauchförmigen Hülle während des Füllvorgangs,

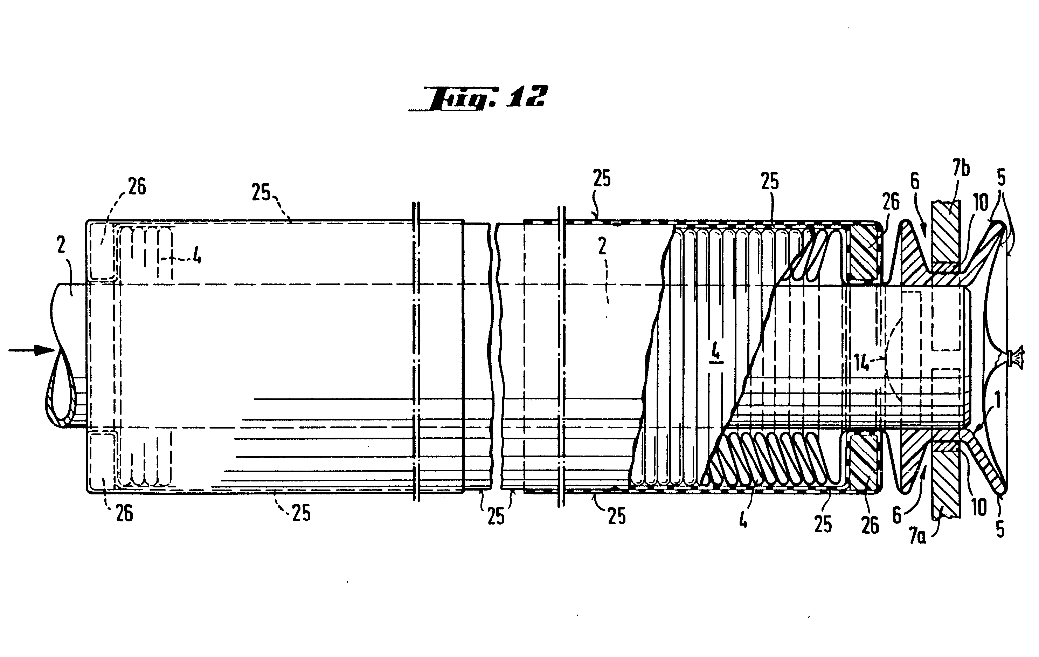

Fig. 12 zeigt eine funktionelle Einheit mit einer Vorrichtung zum Entfälteln und Glätten der Schlauchhülle in Seitenansicht, vorverpackt mit einer gerafften Schlauchhülle in einer Schutzhülle.

In der Fig. 1 bzw. Fig. 1a ist der ringförmige Hohlkörper 1 auf dem Fülrohr 2 einer nicht dargestellten Stopfvorrichtung durch einen Bajonnetverschluß 3 lösbar angebracht. Eine geraffte Schlauchhülle 4 befindet sich auf dem Füllrohr 2, wobei ein entraffter Teil 5 sich über den Hohlkörper 1 erstreckt und in der im Querschnitt V- bzw. U-förmigen Vertiefung 6 von der Bremse 7a und 7b wenig (Fig. 1) bzw. stark (Fig. 1a) eingeschnürt wird. Die zentrale Öffnung 9 des Hohlkörpers 1 ist in der Nähe der Füllrohröffnung 8 trichterförmig aufgeweitet. Mit 10 ist der Bremsbelag, mit 11 die eingefüllte Wurstmasse bezeichnet.

In der Fig. 2 und 2a haben die Bezugsziffern die gleiche Bedeutung wie in der Fig. 1 bzw. 1a. Aus dieser Darstellung sind die im Querschnitt Y- bzw. V-förmigen Segmente 7a und 7b der Bremse zu entnehmen, die die entraffte Schlauchhülle 5 im Bereich der Vertiefung 6 des Hohlkörpers 1 ringartig geringfügig (Fig. 2) bzw. stark (Fig. 2a) einschnüren.

In den Fig. 3 bis 5 zeigt der ringförmige Hohlkörper 1 eine Vertiefung 6.

Die äußere Oberfläche 12 bildet eine geschlossene Fläche. Der innere Umfang weist drei elastisch federnde stegartige Elemente 13 auf, die in beiden Richtungen parallel zur Längsachse einen gebogenen Verlauf ihres Umfangsrandes 14 zeigen.

In den Fig. 6 und 7 hat der ringförmige Hohlkörper 1 die gleiche Form wie in Fig. 3, jedoch ist anstelle der stegartigen Elemente ein Sicherungsring (DIN 471/472) 15 vorgesehen, der mit zwei Stegen 16 und an der Basis 17 mit dem inneren Umfang des Hohlkörpers 1 verbunden ist. Er wird an den abgeschrägten Innenkanten 18 in die Nut 19 des Füllrohres 2 (Fig. 8) eingesetzt, wobei die Ausnehmungen 20 des Sicherungsringes 15 für das Überschieben über die Nocken 21 des Füllrohres 2 erforderlich sind.

In Fig. 8 und 10 ist der ringförmige Hohlkörper 1 auf ein Füllrohr 2 aufgeschoben und mit den stegartigen Elementen 13 in einer Rille oder Nut 19 des Füllrohrs 2 eingerastet. Zum Entfernen vom Füllrohr 2 wird der ringförmige Hohlkörper 1 in Richtung des Pfeiles 22 gedreht bis er in eine Lage kommt wie in Fig. 9 gezeigt, wobei die elastisch federnden stegartigen Elemente 13 auf die Nocken 21 des Füllrohres 2 aufgeschoben werden, so daß der ringförmige Hohlkörper 1 vom Füllrohr 2 abgezogen werden kann. Eine schlauchförmige Hülle 4 befindet sich in gerafftem Zustand auf dem Füllrohr 2 und gleitet über die äußere Oberfläche 12 des ringförmigen Hohlkörpers 1, wobei sie entfältelt und geglättet wird.

In Fig. 11 ist eine Anordnung in Seitenansicht und Schnitt dargestellt, bei der aus einem Füllrohr 2 eine pastöse Wurstmasse 11 unter Druck in eine schlauchförmige Hülle 5 gefüllt wird. Die Hülle 4 befindet sich in gerafftem Zustand auf dem Füllrohr 2, gleitet über den ringförmigen Hohlkörper 1, eingeschnürt von den bremsenden Elementen 7a und 7b, und duchläuft die schematisch eingezeichnete übliche Schneidstation 23 und Abbindestation 24.

In Fig. 12 ist eine vorverpackte funktionelle Einheit dargestellt, bestehend aus der gerafften Schlauchhülle 4, deren entraffter Teil 5 über den Hohlkörper 1 gezogen ist und verschlossen ist. Eine Schutzumhüllung 25 umgibt die geraffte Schlauchhülle 4 und umschlingt eine Kreisringscheibe 26. Sie ist zur Mitte der gerafften Schlauchhülle 4 umgeschlagen und durch Wärmeverschweißung mit dem Teil der Shutzhülle, welches die geraffte Schlauchhülle 4 umgibt, verbunden. Zum Befüllen mit pastöser Masse wird die funktionelle Einheit mit ihrem offenen Ende auf das Füllrohr 2 der Füllvorrichtung aufgeschoben und der Hohlkörper 1 an der Außenoberfläche des Füllrohres 2 befestigt.

**Patentansprüche**

1. Vorrichtung zum Entfälteln, Glätten und Bremsen einer gerafften Schlauchhülle (4) während des Füllens der Schlauchhülle mit fließfähiger Masse wie Wurstmasse (11), umfassend einen die Schlauchhülle (4) entraffenden und glättenden Hohlkörper (1), geeignet zum lösbaren Befestigen auf einem Füllrohr (2) einer Füllvorrichtung und zur Anordnung im Inneren eines entrafften, einen vorgegebenen inneren Durchmesser aufweisenden Schlauchteils (5), wobei der Hohlkörper (1) im wesentlichen starr ist und eine im wesentlichen ring- oder zylinderartige Form mit einer zentralen Öffnung (9) und einer im Querschnitt im wesentlichen kreisförmigen äußeren Umfangsfläche (12) aufweist, welche eine umlaufende im Querschnitt im wesentlichen V- oder U-förmige Vertiefung (6) besitzt, und umfassend eine Bremseinrichtung (7a, 7b), durch die der entraffte Schlauchteil (5) im wesentlichen ringartig eingeschnürt wird, dadurch gekennzeichnet, daß der maximale Außendurchmesser des Hohlkörpers (1) kleiner ist als der vorgegebene innere Durchmesser der zu füllenden Schlauchhülle im ungerafften Zustand, daß der minimale Durchmesser des Hohlkörpers (1) im Bereich seiner Vertiefung um 25 bis 65% kleiner ist als sein maximaler Außendurchmesser und daß die Bremseinrichtung (7a, 7b) den Hohlkörper (1) im Bereich seiner Vertiefung (6) umgibt und den entrafften Schlauchteil (5) in die Vertiefung (6) mit einstellbarem Druck einpressen kann.

2. Vorrichtung nach Anspruch 1, dadurch gekennzeichnet, daß der maximale Durchmesser des Hohlkörpers (1) 70 bis 99, insbesondere 90 bis 99% des Wertes beträgt, den der Innendurchmesser der Schlauchhülle vor dem Raffen gezeigt hat.

3. Vorrichtung nach Anspruch 1 oder 2, dadurch gekennzeichnet, daß die Bremseinrichtung (7a, 7b) aus vorzugsweise gebogenen einzelnen Segmenten besteht, die zusammen einen die äußere Umfangsfläche (12) des Hohlkörpers (1) umgebenden Ring bilden.

4. Vorrichtung nach Anspruch 3, dadurch gekennzeichnet, daß der von den Bremssegmenten (7a, 7b) gebildete Ring die Form eines Vielecks aufweist.

5. Vorrichtung nach einem der Ansprüche 1 bis 4, dadurch gekennzeichnet, daß die Bremseinrichtung (7a, 7b) aus mindestens 2 V-, W- oder Y-förmigen Bremsteilen besteht, die mit ihren beiden Schenkeln auf die äußeren Oberflächen der entrafften Schlauchteils (5) gepreßt werden können.

6. Vorrichtung nach einem der Ansprüche 1 bis 5, dadurch gekennzeichnet, daß die zentrale Öffnung (9) des Hohlkörpers (1) an ihrem einen Ende, welches der Füllrohröffnung (8) benachbart ist, trichterförmig ausgebildet ist.

7. Vorrichtung nach einem der Ansprüche 1 bis 6, dadurch gekennzeichnet, daß die zentrale Öffnung (9) des Hohlkörpers (1) mindestens zwei elastisch federnde stegartige Elemente (13) aufweist, die jeweils in Form einer geradlinig sich erstreckenden Sekante in bezug auf den im wesentlichen kreisförmigen Querschnitt der zentralen Öffnung (9) in symmetrischer Anordnung zum Mittelpunkt des Hohlkörpers (1) und in einer gemeinsamen Ebene senkrecht zur Längsachse des Hohlkörpers (1) angeordnet sind, wobei ihre Form den auf dem Füllrohr (2) angebrachten Nocken (21), sowie Nuten (19) und/oder Rillen angepaßt ist, mit denen sie einen wiederlösbaren Verschluß bilden können.

8. Vorrichtung nach einem der Ansprüche 1 bis 6, dadurch gekennzeichnet, daß die zentrale Öffnung (9) des Hohlkörpers (1) einen spannbaren Sicherungsring (15) (DIN 471/472) zur Befestigung am Füllrohr (2) aufweist.

9. Vorverpackte, funktionelle Einheit zur Verwendung mit dem Füllrohr (2) einer Füllvorrichtung, bestehend aus einer gerafften Schlauchhülle (4) zur Verpackung von Nahrungsmitteln und einer an einem entrafften Ende der Schlauchhülle darin eingeschlossenen Vorrichtung zum Entfälteln und Glätten der Schlauchhülle (4) während des Füllvorgangs in Form eines im wesentlichen steifen Hohlkörpers (1), der eine im wesentlichen ring- oder zylinderartige Form mit einer zentralen Öffnung (9) und einer im Querschnitt im wesentlichen kreisförmigen äußeren Umfangsfläche (12) aufweist, wobei die Schlauchhülle (5) an ihrem einen Ende, das über den Hohlkörper (1) hinausragt, verschlossen ist und auf ihrer Außenseite mit einer Schutzumhüllung (25) umgeben ist, dadurch gekennzeichnet, daß die äußere Umfangsfläche (12) eine umlaufende im Querschnitt im wesentlichen V- oder U-förmige Vertiefung (6) besitzt, daß der maximale Außendurchmesser des Hohlkörpers (1) kleiner ist als der vorgegebene innere Durchmesser der zu füllenden Schlauchhülle im ungerafften Zustand und daß der minimale Durchmesser des Hohlkörpers (1) im Bereich seiner Vertiefung um 25 bis 65% kleiner ist als sein maximaler Außendurchmesser.

**Revendications**

1. Dispositif pour déplisser, lisser et freiner une peau tubulaire plissée (4) pendant l'opération de remplissage de la peau tubulaire au moyen d'une masse semi-fluide telle qu'une chair à saucisse (11), ce dispositif comprenant un corps creux (1) servant à déplisser et lisser la peau tubulaire (4), étant approprié pour être fixé de façon démontable à un tube de remplissage (2) d'une machine de remplissage, et pour être agencé à l'intérieur d'une partie déplissée (5) de la peau tubulaire qui présente un diamètre intérieur prédéterminé, le corps creux (1) étant pratiquement rigide et présentant une forme pratiquement annulaire ou cylindrique, munie d'une ouverture centrale (9) et d'une surface périphérique externe (12) présentant en section une forme pratiquement circulaire, surface qui présente une gorge périphérique (6) possédant en section une forme à peu près en V ou en U, et comprenant un dispositif de freinage (7a, 7b) sous l'effet duquel la partie déplissée (5) de la peau tubulaire est étranglée à peu près en anneau, caractérisé en ce que le diamètre extérieur maximum du corps creux (1) est inférieur au diamètre intérieur prédéterminé de la peau tubulaire à remplir à l'état déplissé, en ce que le diamètre minimum du corps creux (1) dans la région de sa gorge est inférieur de 25 à 65% à son diamètre extérieur maximum, et en ce que le dispositif de freinage (7a, 7b) entoure le corps creux (1) dans la région de sa gorge (6) et peut enfoncer la partie déplissée (5) de la peau tubulaire dans la gorge (6) avec une pression réglable.

2. Dispositif selon la revendication 1, caractérisé en ce que le diamètre maximum du corps creux (1) est égal à 70 à 99%, en particulier à 90 à 99%, de la valeur que le diamètre intérieur de la peau tubulaire présentait avant le plissage.

3. Dispositif selon la revendication 1 et 2, caractérisé en ce que le dispositif de freinage (7a, 7b) est composé de segments distincts, de préférence courbes, qui forment ensemble un anneau qui entoure la surface périphérique externe (12) du corps creux (1).

4. Dispositif selon la revendication 3, caractérisé en ce que l'anneau formé par les segments de freinage (7a, 7b) présente la forme d'un polygone.

5. Dispositif selon l'une des revendications 1 à 4, caractérisé en ce que le dispositif de freinage (7a, 7b) est composé d'au moins deux éléments de freinage de V, de W ou de Y, qui peuvent être pressés par leurs deux branches sur les surfaces externes de la partie déplissée (5) de la peau tubulaire.

6. Dispositif selon l'une des revendications 1 à 5, caractérisé en ce que l'ouverture centrale (9) du corps creux (1) est d'une configuration en entonnoir à son extrémité qui est proche de l'ouverture (8) du tube de remplissage.

7. Dispositif selon l'une des revendications 1 à 6, caractérisé en ce que l'ouverture centrale (9) du corps creux (1) présente au moins deux éléments élastiques (13) en forme de doigts qui sont disposés, chacun sous la forme d'une sécante rectiligne de la section approximativement circulaire de l'ouverture centrale (9) dans une disposition symétrique par rapport au centre du corps creux (1) et dans un plan commun perpendiculaire à l'axe longitudinal du corps creux (1), leur forme étant adaptée aux bossages (21) prévus sur le tube de remplissage (2) ainsi qu'aux gorges (19) et/ou sillons prévus sur ce tube et avec lesquels ils peuvent former un verrouillage démontable.

8. Dispositif selon l'une des revendications 1 à 6, caractérisé en ce que l'ouverture centrale (9) du corps creux (1) présente une bague de verrouillage (15) pouvent être soumise à une tension (norme DIN 471/472) servant à assurer la fixation sur le tube de remplissage (2).

9. Article fonctionnel préconditionné destiné à être utilisé avec le tube de remplissage (2) d'une machine de remplissage, composée d'une peau tubulaire plissée (4) destinée au conditionnement de denrées alimentaires et un dispositif placé au niveau d'une extrémité déplissée de la peau tubulaire, enfermé dans cette extrémité et destiné à déplisser et à lisser la peau tubulaire (4) pendant l'opération de remplissage, ce dispositif présentant la forme d'un corps creux (1) pratiquement rigide, qui présente une forme à peu près annulaire ou cylindrique et muni d'une ouverture centrale (9) et d'une surface périphérique (12) externe à section à peu près circulaire, la peau tubulaire (4) étant fermée à son extrémité qui déborde au-delà du corps creux (1) et étant entourée sur sa face externe d'une enveloppe protectrice (25), caractérisé en ce que la surface périphérique externe (12) présente une gorge périphérique (6) à section à peu près en V ou en U, en ce que le diamètre extérieur maximum du corps creux (1) est plus petit que le diamètre intérieur prédéterminé de la peau tubulaire à remplir, à l'état déplissé, et en ce que, dans la

région de sa gorge, le diamètre minimum du corps creux (1) est inférieur de 25 à 65% à son diamètre extérieur maximum.

**Claims**

1. A device for deshirring, smoothing and braking a shirred tubular casing (4) during the stuffing of the tubular casing with a fluid material, for example sausage emulsion (11), the device comprising a hollow body (1) which deshirs and smoothes the tubular casing and is adapted for being releasably secured to a stuffing horn (2) of a stuffing device and for being disposed in the interior of a deshirred tubing portion (5) having a prescribed internal diameter, the hollow body (1) being substantially rigid and having a substantially annular or cylindrical form with a central opening (9) and an outer circumferential surface (12) with a substantially circular cross section, which is provided with an annular recess (6) having a substantially V-shaped or U-shaped cross section, and the device further comprising a braking device (7a, 7b) by which the deshirred tubing portion (5) is substantially annularly constricted, wherein the maximum outer diameter of the hollow body (1) is smaller than the prescribed inner diameter in the unshirred condition of the tubular casing to be filled, the minimum diameter of the hollow body (1) in the region of its recess is from 25 to 65% smaller than its maximum outer diameter, and the braking device (7a, 7b) surrounds the hollow body (1) in the region of its recess (6) and is capable of pressing the deshirred tubing portion (5) into the recess (6) with an adjustable pressure.

2. A device according to Claim 1, wherein the maximum diameter of the hollow body (1) is from 70 to 99 percent, in particular from 90 to 99 percent, of the value which the inner diameter of the tubular casing had prior to shirring.

3. A device according to Claim 1 or Claim 2, wherein the braking device (7a, 7b) comprises individual segments which are preferably curved and together form a ring which surrounds the outer circumference (12) of the hollow body (1).

4. A device according to Claim 3, wherein the ring formed by the braking segments (7a, 7b) has the form of a polygon.

5. A device according to any of Claims 1 to 4, wherein the braking device (7a, 7b) comprises at least two V-shaped, W-shaped or Y-shaped brake elements which can be pressed with both of their arms against the outer surface of the deshirred tubing portion (5).

6. A device according to any of Claims 1 to 5, wherein the central opening (9) of said hollow body (1) has a funnel-like form at one end which is adjacent to the orifice (8) of the stuffing horn.

7. A device according to any of Claims 1 to 6, wherein the central opening (9) of the hollow body (1) is provided with at least two elastically resilient, crosspiece-like elements (13), each having the form of a straight secant with reference to the substantially circular cross section of the central opening (9) and being symmetrically arranged with respect to the center of the hollow body (1) and located in a common plane perpendicular to the longitudinal axis of the hollow body (1), the form of the elements corresponding to the cams (21), grooves (19) and/or furrows provided on the stuffing horn (2), with which they may form a releasable lock.

8. A device according to any of Claims 1 to 6, wherein the central opening (9) of the hollow body (1) is provided with an expandable securing ring (15) (DIN 471/472) for fastening the hollowing body to the stuffing horn (2).

9. A prepackaged functional unit for use with the stuffing horn (2) of a stuffing device comprising a shirred tubular casing (4) for packaging foods and a device for deshirring and smoothing the tubular casing (4) during the stuffing process disposed within an unshirred end of the tubular casing, in the form of a substantially rigid hollow body (1) having a substantially annular or cylindrical shape, with a central opening (9) and an outer circumferential surface (12) having a substantially circular cross section, the tubular casing (4) being closed at its end which extends beyond the hollow body (1) and being surrounded by a protective cover (25) on its outside, wherein the outer circumferential surface (12) has an annular recess (6) with a substantially V-shaped or U-shaped cross section, the maximum outer diameter of the hollow body (1) is smaller than the predetermined inner diameter in the unshirred condition of the tubular casing to be filled, and the minimum diameter of the hollow body (1) in the region of its recess is from 25 to 65% smaller than its maximum outer diameter.

Fig. 2

Fig. 1

0 070 363

Fig. 2n

Fig. 1n

3

Fig. 5

Fig. 4

Fig. 3

*Fig. 6*

*Fig. 7*

0 070 363

**Fig. 8**

**Fig. 10**

9

**Fig. 11**

Fig. 12